Europäisches Patentamt

**European Patent Office**

Office européen des brevets

(11) Publication number: **0 158 305**
**A1**

(12) **EUROPEAN PATENT APPLICATION**

(21) Application number: **85104186.3**

(22) Date of filing: **05.04.85**

(51) Int. Cl.⁴: **F 16 B 29/00**
**F 16 B 13/00**

(30) Priority: **13.04.84 US 600264**

(43) Date of publication of application:
**16.10.85 Bulletin 85/42**

(84) Designated Contracting States:
**DE FR GB**

(71) Applicant: **The B.F. GOODRICH Company**
**Dept. 0015 WHB-6 500 South Main Street**
**Akron, Ohio 44318(US)**

(72) Inventor: **Shackelford, James Russel**
**225 Lincoln Avenue**
**Cuyahoga Falls Ohio 44221(US)**

(74) Representative: **von Kreisler, Alek, Dipl.-Chem. et al,**
**Deichmannhaus am Hauptbahnhof**
**D-5000 Köln 1(DE)**

(54) **Fasteners.**

(57) A fastener (10) of the blind rivet variety having an external flanged or headed portion (22) and an internal threaded portion (46) and having a counter bored portion (36) therebetween. The thickness of material in the threaded portion (46) is greater than that in the thickness of material in the counter bored portion (36) to provide additional strength in the threaded area (46) of the fastener (10). The thinner walls in the counter bored portion (36) permit the complete upsetting of the fastener (10) to present threads as close as possible to the shoulder (22) of the fastener (10) and the exterior surface of thin sheet metal (28) in which it is to be secured. The fastener (10) is particularly well suited for receiving cylindrically threaded members such as buttons (72) for automotive panels and stoppers for waste containment drums.

FIG. 1

FIG. 2

# FASTENERS

## BACKGROUND OF THE INVENTION

The threaded attaching of cylindrical members with externally formed threads to thin metal sheets with internally formed threads presents many problems. These problems are generally created because thin sheet material with a threaded aperture cannot be readily formed with receptive threads of adequate strength to withstand forces encountered during normal installation and wear.

When, for example, stamped sheet metal is apertured and threaded by known metal forming techniques, an insufficient mass of material is normally present for proper threading attachments. This results in insufficient strength in the threaded area for adequately receiving and supporting a threaded member to be mated with the threads formed in the aperture of the sheet material.

A typical segment of industry where this problem exists is in automotive panels which are required to receive and support a threaded button or the like. Another industry segment is in the orifices of sheet metal barrels where a threaded stopper is utilized to seal the contents of the barrel.

One approach in solving this problem and in providing adequate strength for the threaded support member, is in the use of fasteners generally known as blind rivets. Such fasteners may be positioned to extend through, and be supported by, the aperture in the thin-walled member. However, known varieties of blind rivets have been found inadequate for the purpose either because of their excessive cost or because of 0158305 inadequacy of the support which they provide.

Typical of the prior art blind rivets found inadequate for the purposes of the present invention are those described in U.S. Patent No. 2,392,133 to Eklund; U. S. Patent No. 3,136,203 to Davis; and U.S. Patent No. 3,461,771 issued to Briles.

In the first mentioned prior art reference, that to Eklund, a relatively typical blind fastener is described but would be found inadequate for the purposes of solving the problem herein described. For example, in Eklund the disclosed blind rivet is positioned in the aperture of the sheet material with which it is to be coupled. The internal counter bored portion of the blind rivet has an interior diameter essentially equal to the inner diameter of the threads of the threaded portion of the blind rivet. As a result, the strength of the rivet in the threaded portion is not substantially stronger than the counter bored portion. Such an arrangement does not give the required extra strength in the threaded portion for the intended purpose of the present invention. Also, the excessive thickness in the counter bored portion creates a bulge or upset portion which is excessively thick. This excessive mass of material at the upset portion precludes the threads of the fastener from being operatively positioned as close as possible to the exterior surface of the metal supporting the blind rivet.

The prior art reference to Davis might be considered a partial solution to the problem herein discussed. Davis provides his blind rivet with a central section to be upset or bulged with walls of a thickness thinner than the areas on either side thereof. Such thin section will, in fact, permit the Davis threaded portion to be operatively positioned closer to the exterior surface of the apertured sheet than would have occurred had this central section been of the same thickness as the rest of his fastener. However, Davis continues with a thickened or strengthened portion in his counter bored area within the zone of the aperture whereat the sheet members being coupled. This arrangement is wasteful in that it utilizes excess material in the blind rivet where such excess material is not needed. This results in excessive cost, weight and manufacturing time. Further, the complexity of the design would result in high fabrication costs.

Lastly, the prior art reference to Briles discloses a blind rivet wherein his counter-bored portion includes three zones, a first or excessively thick-walled zone within the aperture of the sheet material. This is followed by a second or relatively thin-walled section thereafter followed, in turn, by a tapered section. This arrangement is quite complex, and, like Davis, would be expensive, requiring excessive steps and materials during fabrication. Beyond this, the particular structural arrangement provided by Briles does not provide for the total upsetting of the blind rivet to bring the threaded area as close as possible to the exterior surface of the apertured material in which it is to be received. The reference to Briles also would be expensive to fabricate and would use excess materials in areas where such excess materials are not needed thus increasing the cost of the Briles fasteners.

While each prior art structure, including those referred to above, is well adapted to its particular purpose and function, none has provided the benefits of economically and securely providing sturdy threads in an aperture of sheet material for the reception of a threaded member.

## SUMMARY OF THE INVENTION

The present invention is directed to an improved blind rivet fastener especially designed and constructed to be attached to the walls of an aperture in a thin-walled member and for providing, at reduced costs, strengthened threads as closely positioned as possible to the exterior surface of the walled member in which it is to be supported. Such a blind rivet, when operatively positioned in a thin-walled member, provides for the reliable reception of an externally threaded member. The present invention is particularly well suited for providing internal threads in an aperture of an automobile panel for the mating reception of a cylindrical button with external threads. The present invention is also particularly well suited for providing internal threads in an aperture of a thin-walled metal barrel for the mating reception of a cylindrical stopper formed with external threads.

Like most blind rivets, the present inventive fastener includes an exterior end formed with a flange for precluding the fastener from totally passing through the aperture in the surface in which it is to be received and supported. The interior end of the rivet also is provided with an internally threaded portion and, intermediate the exterior flanged end and the interiorly threaded

0158305

end, is the internal, counter bored portion. An aperture extends the entire length through the inner surface of the fastener and is of a common diameter through the counter bored portion but of a lesser internal diameter at the threads. The exterior surface of the fastener is cylindrical, essentially of a common diameter except at the head where it is enlarged. The design and construction is such as to provide strengthened material in those portions of the fastener where strength is desired, specifically at the threads, and to provide thin-walled segments in those portions of the fastener where such extra strengthening is not required, specifically at the counter bore. This arrangement provides for maximumized utility at minimized cost of material and in fabrication.

In the preferred embodiments, the threaded portion of the fastener is provided with thickened walls for maximizing the strength of the area being coupled to the externally threaded cylindrical member to be mated therein. At the counter bored portion, thin fastener walls are provided so that the portion of the fastener extending through the aperture in the sheet material and beyond can be efficiently upset or bulged prior to utilization. Such an arrangement of thin walls and strengthened threads will permit a total and tight upsetting of the rivet to thus bring the strengthened threaded portion as close as possible to the exterior surface of the apertured sheet material in which it is to be positioned and secured. This arrengement also permits a most secure attachment of the fastener to the sheet material. These characteristics are particularly important in applications such as the automotive industry and the container industry.

In order to gain a better understanding of the invention as well as other advantages and further features thereof, reference is made to the following detailed description of the invention to be read in conjunction with the accompanying drawings and claims which form a part of this application.

BRIEF DESCRIPTION OF THE DRAWINGS

Figure 1 is an enlarged sectional illustration of the blind rivet type fastener mounted in an apertured sheet and also showing a cylindrical, externally threaded button with its threads screwed into the threads of the secured fastener assembly.

Figure 2 is a perspective view illustrating the fastener of Figure 1 prior to installation with parts thereof broken away to show internal constructions thereof.

Figure 3 is a side elevational view of the fastener and apertured sheet material of Figures 1 and 2, but shown partly in section and with parts broken away to show internal constructions and also with the upsetting tool in operative position immediately following the upsetting of the fastener in the sheet material aperture.

Figure 4 is a perspective view of the upper portion of a sheet metal drum for the containment of waste material and having provided therein an externally threaded stopper mounted in the blind rivet which is positioned and secured in the aperture of the drum.

Figure 5 is an enlarged sectional illustration of a portion of the drum, its aperture, the blind rivet and threaded stopper taken along sectional line 5-5 of Figure 4.

0158305

Figure 6 is a perspective view of the blind rivet fastener shown in Figures 4 and 5 with parts broken away to show internal constructions.

Figure 7 is a side elevational view of the blind rivet fastener positioned in the apertured drum similar to Figures 4 and 5 but shown partly in section and with parts broken away to show internal construction thereof and also showing the upsetting tool operatively positioned within the blind rivet immediately following the upsetting of the fastener.

## DESCRIPTION OF THE PREFERRED EMBODIMENTS

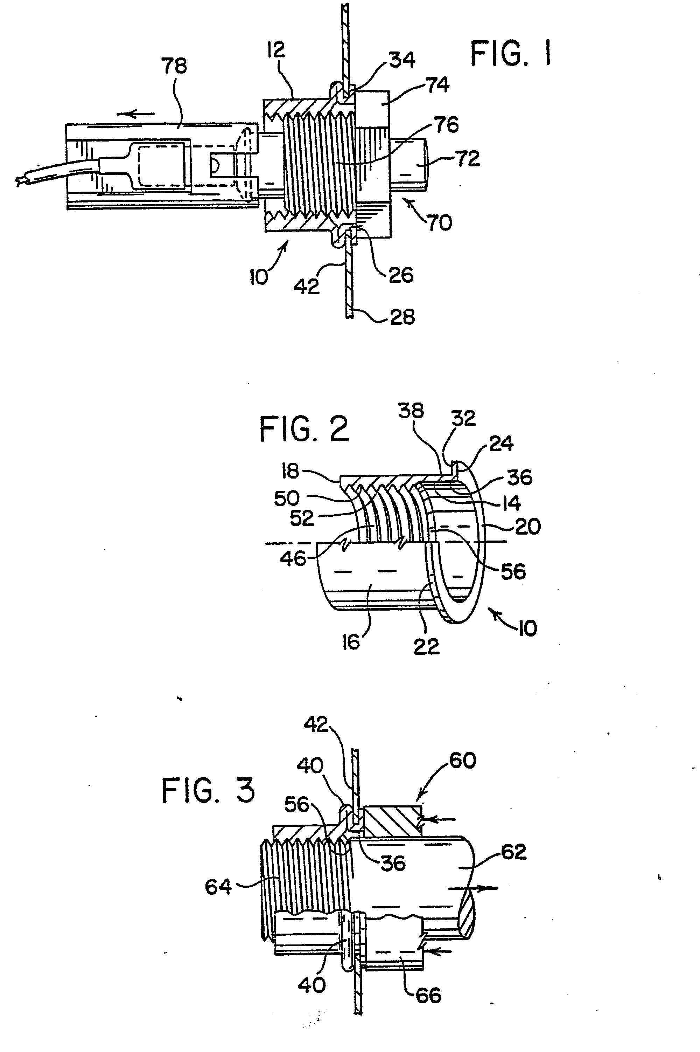

As shown in the figures, the blind rivet or fastener 10 includes a tubular shaped body 12. This is illustrated in the first preferred embodiment in Figures 1 through 3. The fastener is formed as a member having an interior surface 14 and an exterior surface 16 and having an interior end 18 and an exterior end 20. The exterior end is provided with a flange or shoulder 22 having an exterior face 24 positionable exterior of the hole or aperture 26 of the sheet metal 28 into which it is to be inserted and to which it is to be attached. The interior surface 32 of the shoulder is adapted to be contacted by and supported by the wall 34 of the sheet material adjacent the aperture to preclude the movement of the entire fastener into and through the hole.

The portion of the fastener next adjacent the shoulder is the counter bored portion 36. The counter bore 36 has an exterior surface 38 adapted to reside within the aperture of the sheet material. Further interior thereof, also in the counter bored portion, is that portion which is to be upset or formed into a bulge 40 during

0158305

operation. As can be seen in Figures 1 and 3, the bulged portion is adapted to contact the interior surface 42 of the apertured wall during operation for the firm support and containment of the fastener in its operative position.

The most interior segment of the fastener is the threaded portion 46. As can be seen in the drawings, particularly with reference to Figure 2, the exterior surface of the fastener is of a common cross section from the interior end to the shoulder segment at the exterior end. As can be also seen with reference to Figure 2, the interior surface of the fastener at the counter bored portion is of an inner diameter greater than the inner diameter of the threaded portion including the grooves 50 as well as the lands 52 of the threaded portion.

By this arrangement and construction, additional material and strength is provided to the fastener in the threaded area for the firm securement of an externally threaded member while the wall of the counter bored portion is thinner through its entire extent to save material, weight and fabrication costs. Moreover, this arrangement and construction permits a smaller bulge by virture of the thin walls in the counter bore area.

The material of the bulge is pulled tightly to contact the interior surface of the sheet material and securely hold the fastener to the sheet material. Because of this, the threads of the fastener may be pulled as close as possible to the exterior surface of the sheet metal to which the fastener is to be attached. Consequently this permits a strengthened coupling between the threadingly mated members.

An angled shoulder portion 56 is also provided in the area of the interior central section of the fastener where the threaded portion and the counter bored portion meet.

In order to install the blind rivet fastener of the present invention, the fastener is inserted into the aperture of the walled member with its shoulder in contact with the exterior surface of the walled member. An upsetting tool 60, having a central reciprocal member 62 with external threads 64, is screwed a predetermined distance into the threads of the fastener. An abutment member 66 surrounding the reciprocal member is then placed in pressure engagement with the exterior surface of the shoulder of the fastener and pressure is applied to the shoulder members through the abutment surfaces. A force of predetermined magnitude and distance is applied through the pulling out of the reciprocal member, concurrently with the pushing in of the abutment surface, to form the bulge in the central portion of the fastener member. The direction of these forces is shown by the arrows in Figure 3. Thereafter, the reciprocal member is unscrewed from the blind fastener and the fastener is ready for the threaded reception of the threaded member, which, in this embodiment is an automobile button.

The automobile button assembly 70, as shown in Figure 1, is actually as assembly which includes the button 72 itself, a hexagonally shaped nut, a threaded area 76 for engagement into the threads of the fastener as well as other electrical components 78 which are to be activated or inactivated to supply electronic intelligence in response to the depression of the button assembly.

As can be seen, the hexagonally shaped nut of the button precludes the excessive movement of the button to interior of the fastener and sheet material while providing a counteractive force to the threaded engagement between the button assembly and the threads of the fastener.

In this first embodiment, the inner surface of the blind rivet fastener has a shoulder portion of about 0.03 inches in thickness with the length of the remainder of the body portion of the fastener being 0.57 inches. The exterior diameter of the main body portion is about 0.61 inches. The exterior diameter of the shoulder is about 0.75 inches. The counter bored portion is of a diameter of about 0.55 inches while the threads have inner and outer diameters of about 0.35 and 0.47 inches respectively.

The material is preferably steel. The tensile strength is about 45,000 pounds per square inch minimum. A finishing plating may be provided.

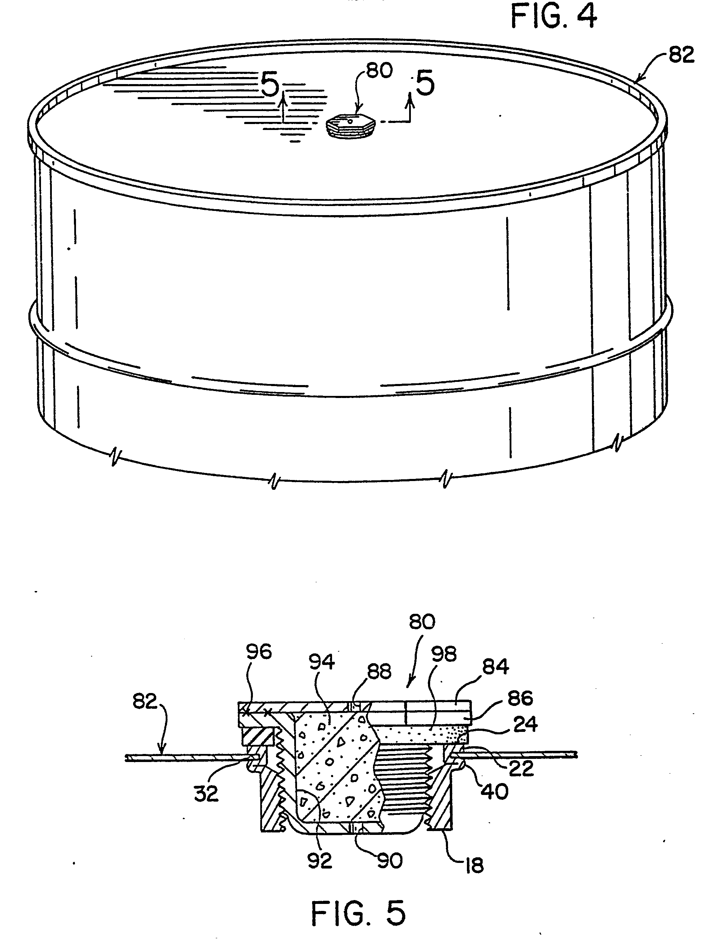

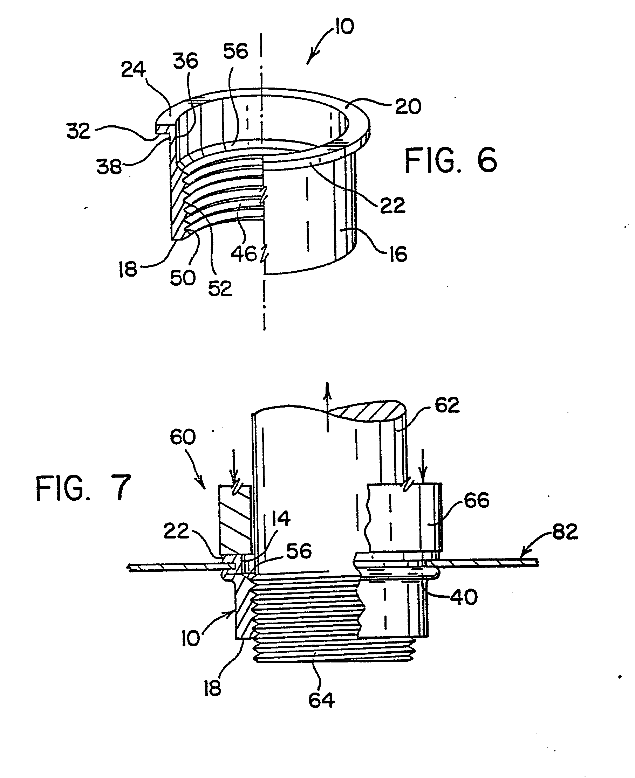

Now turning to Figures 4 through 7 there is shown a second embodiment of the present invention wherein the blind rivet or fastener is used to secure a threaded stopper 80 to an aperture in a container or sheet metal drum 82 for the containment of waste material. The threaded stopper may be inserted or removed from the threads of the fastener for the adding or removing of contaminants to or from the barrel. As in the first described embodiment, the thin walled member or drum top is apertured for the reception of the blind rivet type fastener. The reference numerals of the second embodiment are the same as those for the first embodiment and the parts of the fastener function in essentially the same manner. Only the materials, dimensioning and proportioning are different merely to suit the particular application.

The threaded stopper 80 is preferably formed of a low carbon steel. It includes a planar member 84 and a dished member 86. Holes 88 and 90 are provided through both of these members with a central cavity 92 therebetween being filled with activated charcoal 94. The holes permit the escape of gas fumes possibly formed, as for example, by fermentation occuring within the container. The activated charcoal can function to purify such exhaust fumes. Both members may be joined by spot welds 96 to form a unitary stopper. The coupled segments of the stopper are shaped as a hexagon for ease of attachment and removal. In this embodiment, a gasket 98, formed of neoprene or other natural or synthetic elastomeric material, is utilized to complete the seal.

In this particular embodiment of the invention, the body of the fastener has an exterior diameter of about 1.18 inches. The exterior diameter of the shoulder is about 1.37 inches. A radius of about 1/32 of an inch may be provided on the exterior surface of the shoulder. The counter bore of the fastener has an interior diameter of about 1.13 inches. The threaded portion has an inner and outer diameter of about 0.95 and 1.05 inches respectively. A chamfer of about 60 degrees may be provided at the section between the threaded portion and counter bored portion. The length of the body portion is about 0.65 inches and the length of the shoulder is about 0.06 inches.

The material for the fastener is steel, having a strength of about 79,000 pounds per square

0153305

inch minimum. A finish of minimum thickness may be provided.

It should be understood that other materials may be utilized in either embodiment of the present invention but would be generally selected from the class of materials including aluminum, steel or even brass or stainless steel. A low carbon steel has been found to be preferred.

Also, with regard to both embodiments of the invention, an appropriate upsetting tool is utilized which may be adjusted for a particular application by having a variable stroke and pressure to meet the needs of the application.

In all of these embodiments of the present invention it has been found that at least three but preferably four or more threads of the fastener be contacted by the threadedly inserted cylindrical member, whether a button assembly or container stopper, during use to provide the appropriate securement between the blind fastener and the member to be threaded therein. Also, the threads must be of length and strength to permit the torque requirements of the user to be met. This is achieved through the use of an adequate number of thread couplings along with the appropriate strength in the threaded portion of the fastener.

While the present invention has been described above as being carried out in particular preferred embodiments, it is intended to be covered broadly within the spirit and scope of the appended claims.

## CLAIMS

What is claimed is:

1. A fastener of the blind rivet variety having an exterior end and an interior end and having an exterior surface and an interior surface, said fastener having an aperture extending therethrough along its entire interior surface, threads formed in the interior surface adjacent the interior end, an outwardly extending shoulder formed on the exterior surface at the exterior end and a counter bore formed in the interior surface between the threads and the shoulder, the counter bore being of a common diameter along its entire length, such common diameter being greater than the diameter of the threads.

2. The fastener as set forth in claim 1 and further including a cylindrical member with external threads in mating engagement with the threads of said fastener.

3. The fastener as set forth in claim 2 wherein said cylindrical member is a button assembly.

4. The fastener as set forth in claim 2 wherein said cylindrical member is a stopper.

5. A fastener of the blind rivet variety having an exterior end and an interior end and having an exterior surface and an interior surface, said fastener having an aperture therein along its entire interior surface, threads formed in the interior surface adjacent the interior end and a counter bore formed in the interior surface adjacent the exterior end, the counter bore being of an essentially common diameter along its interior length with the fastener being strengthened adjacent the threads as compared with that portion of the fastener at the counter bore.

0158305

FIG. 1

FIG. 2

FIG. 3

## FIG. 4

## FIG. 5

0158305

**FIG. 6**

**FIG. 7**

**European Patent Office**

**EUROPEAN SEARCH REPORT**

Application number

| DOCUMENTS CONSIDERED TO BE RELEVANT | | | EP 85104186.3 |
|---|---|---|---|
| Category | Citation of document with indication. where appropriate, of relevant passages | Relevant to claim | CLASSIFICATION OF THE APPLICATION (Int Cl 4) |
| X | GB - A - 2 120 347 (YOSHIKAZU SAKA-MURA) <br><br> * Abstract; fig.; page 1, lines 7-11 * <br><br> -- | 1,2,5 | F 16 B 29/00 <br><br> F 16 B 13/00 |
| D,A | US - A - 3 461 771 (FRANKLIN S. BRILES) <br><br> * Abstract; fig. * <br><br> -- | 1,2 | |
| D,A | US - A - 3 136 203 (JOHN H.DAVIS) <br><br> * Claims; fig. 1,2 * <br><br> -- | 1,2 | |
| D,A | US - A - 2 392 133 (HOWARD J.EKLUND) <br><br> * Claim 1; fig. * <br><br> -- | 1,2 | |
| A | US - A - 4 182 216 (CHARLES J. DE-CARO) <br><br> * Abstract; fig. * <br><br> -- | 1,2 | TECHNICAL FIELDS SEARCHED (Int. Cl 4) <br><br> F 16 B |
| A | US - A - 3 858 479 (JAGDISH S.SEK-HON) <br><br> * Abstract; fig. 1,2,5 * <br><br> ---- | 1,2 | |

The present search report has been drawn up for all claims

| Place of search | Date of completion of the search | Examiner |
|---|---|---|
| VIENNA | 21-06-1985 | REIF |